# EUROPEAN PATENT SPECIFICATION

(11) **EP 0 522 665 B1**
(45) Date of publication and mention of the grant of the patent: **10.04.1996**
(21) Application number: 92202144.9
(22) Date of filing: 13.07.1992
(51) Int. Cl.: A01K 1/06

(54) **Self-catching feeding fence**
Einsperrgitter
Cornadis

(30) Priority: 12.07.1991 BE 9100667
(43) Date of publication of application: 13.01.1993
(73) Proprietor: Weelink, Johannes Martinus Willibrordus, NL-9481 AD Vries (NL)
(72) Inventor: Weelink, Johannes Martinus Willibrordus, NL-9481 AD Vries (NL)
(74) Representative: 't Jong, Bastiaan Jacobus

(56) References cited:
- EP-A- 0 322 023
- DE-A- 3 528 377
- DE-A- 3 904 738
- DE-U- 9 017 454
- NL-A- 8 400 199

## Description

The invention relates to a self-catching feeding fence for cattle, as known from DE-U-9 017 454.

The invention has for its object to provide a feeding fence of the mentioned kind, which features great ease of operation, an accurate and reliable action and which moreover enables an efficient production.

This object is achieved with the self-catching feeding fence as characterized in claim 1.

Self-catching feeding fences are known generally and in many embodiments.

The feeding fence according to the invention which is distinguished from the prior art by great ease of operation, an accurate and reliable action and which moreover enables an efficient production, is characterized in claim 1.

With the step of claim 2 is achieved that the locking member is mounted in enclosed manner so that the cattle cannot come into contact with the lock itself and manipulate it. The simultaneously achieved function of the guiding of the top end of the swivel bar ensures that the swivel bar can absorb great forces exerted by the cattle.

A favourable embodiment is characterized in claim 3. Pushing downward of the control arm of the locking member is achieved with a very simple construction which thereby functions reliably in the long-term.

The swivel bars of all feed locations can be released simultaneously using the control rod. It is sometimes desired however to release only one feed location and the step of claim 4 offers a very favourable option herefor in the feeding fence according to the invention. When the swivel bar is released it can move with force into the open position because the caught animal presses against the swivel bar. Because as according to claim 4 only the upper part of the control arm of the locking member is accessible, the swivel bar or the locking arm of the locking member cannot crush the finger of the operative as it swivels back.

With the step of claim 5 is achieved that the control rod is very lightly slidable in the upper hollow beam. Further achieved herewith is that the position of the control rod in the upper beam can be precisely determined as seen in transverse direction.

When further the step of claim 6 is applied a very simple and inexpensive construction is obtained which can be mounted very rapidly.

A further development that is favourable due to the simplicity of construction is characterized in claim 7. To arrange the control cam only one hole has to be drilled in the control rod, in which hole the bolt can be fixedly screwed. In favourable manner a per se known nut riveted to the rod can be used as fastening nut so that the control cams can be arranged simply via the relevant slots in the upper beam after the control rod has been pushed to its place therein.

In particular cases it is desired to hold the animals caught individually in the fence. The step of claim 8 forms for this purpose a simple and useful solution.

A further favourable development of the invention is characterized in claim 9. Through being able to swivel the swivel bar there results a greater space at the bottom of the opening formed between the fixed bar and the swivel bar. If an animal with its head caught in the fence lies down it can normally be freed only with the greatest possible difficulty. Through further swivelling of the swivel bar the animal can now withdraw its head through the larger opening at the bottom so that it can stand up easily.

A favourable further development is characterized in claim 10. The thus formed hinge construction has no protruding parts behind which an animal can become snagged, for instance with its collar, while a robust construction is nevertheless obtained.

The step of claim 11 enables arranging of the control lever at a random position in the lengthwise direction of the fence. When moreover the step of claim 12 is applied an accurate adjustment can be obtained so that the control cams can move the locks into the different positions in reliable manner.

When as according to claim 14 each section of a feeding fence comprises as standard provision a control cam for a control lever, the control lever can be placed at a suitable position of the feeding fence without further prior preparation.

A simple construction for interconnection of the control rods of a number of sections is characterized in claim 15.

The invention will be further elucidated in the following description with reference to the annexed figures of an embodiment.
Figure 1 shows a partly broken away front view of a feeding fence according to the invention,
Figure 2 shows a detail according to II in figure 1,
Figure 3 shows a view corresponding with figure 2 of another operating situation,
Figure 4 shows a section along IV-IV in figure 3,
Figure 5 shows a detail according to arrow V in figure 1,
Figure 6 shows another embodiment of the feeding fence according to the invention;
Figure 7 shows a detail according to VII in figure 6,
Figure 8 shows a detail according to VIII in figure 1,
Figure 9 shows a section along IX-IX in figure 8,
Figure 10 shows a detail according to arrow X in figure 1,
Figure 11 shows a variant of figure 1,
Figure 12 is a perspective view in the direction of the arrow XII in figure 11,
Figure 13 shows a view of a detail 13 of figure 11,
Figure 14 is a top view of the construction of figure 13,
Figure 15 shows a view along the line XV-XV in figure 13, and
Figure 16 is a perspective view of a locking pin for use in the construction according to figures 13 and 14.

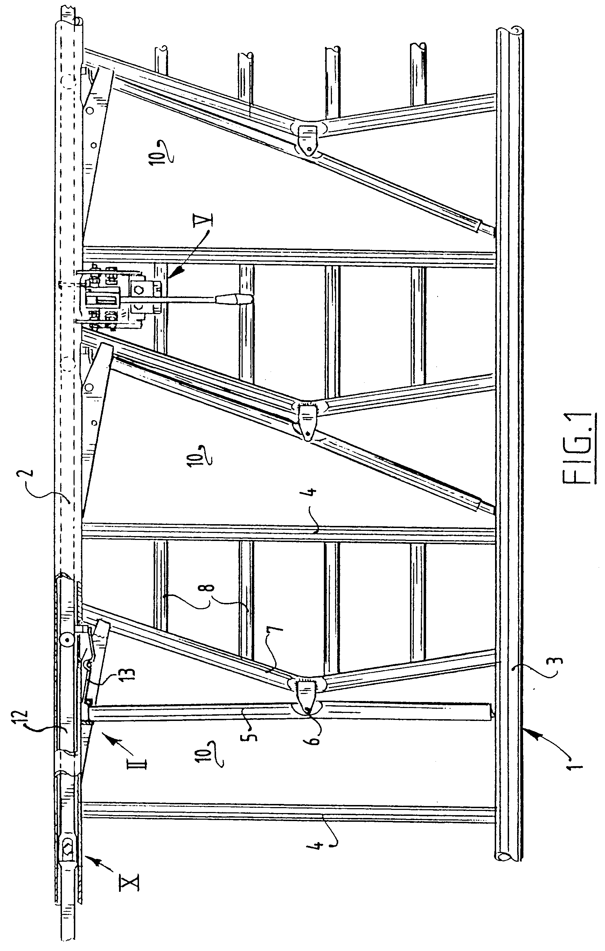

The feeding fence 1 shown in figure 1 comprises a hollow upper beam 2 and a lower beam 3 parallel thereto. Defined between these beams is a number of feed locations 10 each of which is bounded by a fixed bar 4 and a swivel bar 5 which is connected between its ends by means of a hinge 6 to a folded bar 7 of the fence. In the embodiment shown in figure 1 a number of horizontal rods 8 is arranged between the folded bar 7 and the fixed bar 4 of the adjacent feed location, which rods serve to stiffen the fence and which can moreover be used as ladder so that a farmer can climb easily over the fence.

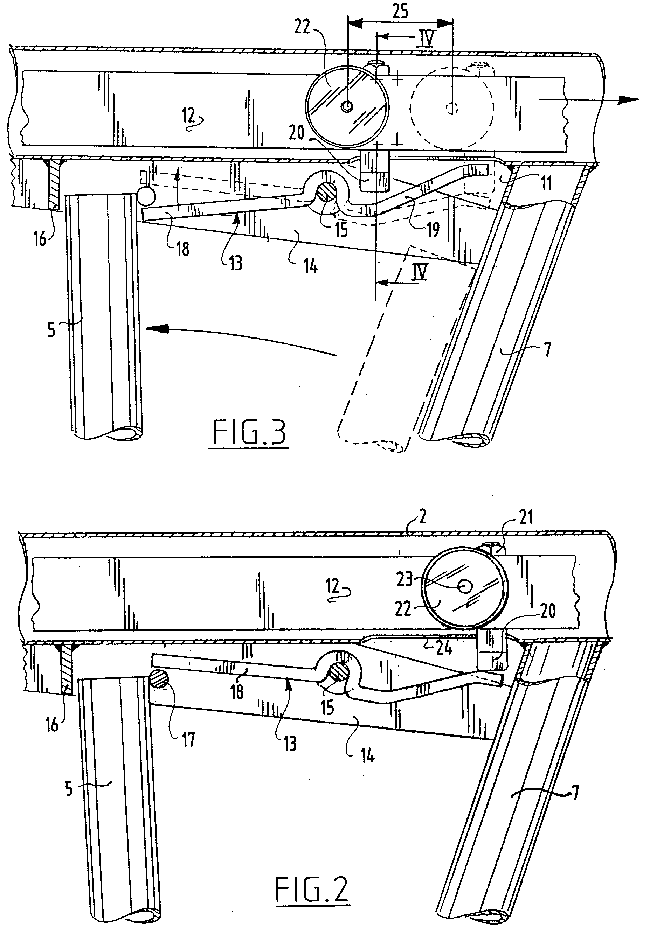

Each swivel bar 5 can swivel between an open position as shown in the two right-hand feed locations 10 in figure 1 and a catching position as shown in the left-hand feed location in figure 1. In the catching position the swivel bar 5 can be locked by means of a lock 13 which is shown in more detail in figures 2 and 3. The locking member 13 can be in an active locking position and in an inactive position. In the active locking position which is shown in figure 3 the swivel bar can move from the open position drawn in figure 3 with dashed lines to the catching position drawn in full lines and therein raise the locking arm 18 of the lock 13 pivoting about the pivot pin 15 from the position drawn with full lines to the position drawn with dashed lines. After the top end of the swivel bar 5 has passed the locking arm 18 the lock 13 falls back into the position drawn in full lines whereby the swivel bar 5 is locked in the catching position. This sequence occurs when for instance a cow pushes its head through the wide opening at the top of the feed location 10 and subsequently moves it downward. The cow presses with its neck against the bottom end of the swivel bar 5 whereby this is swivelled into the catching position and is locked therein by the lock.

The locking member 13 can be constrained into the position drawn with dashed lines using the control rod 12 which is mounted slidably in its lengthwise direction in the upper beam 2, whereby the locking of the swivel bars 5 is disengaged and the caught animals can free themselves. As shown in figure 3, when the control rod 12 moves through the stroke 25, the control cam 20 which is fixedly connected to the rod 12 comes into engagement with the control arm 19 of the locking member 13. This control arm 19 is hereby pressed downward and the locking arm 18 moved upward.

The locking member 13 is mounted by means of the pivot pin 15 between two guide plates 14 extending mutually parallel on either side. These guide plates serve moreover to guide the top end of swivel bar 5. In the portion where the control arm 19 of the locking member 13 extends an opening 11 is present between the upper beam 2 and the guide plate 19. An operative can press the control arm 19 downward with a finger via this opening 11. In this manner a caught animal can be individually released. The fingers of the operative cannot come into contact with the swivel bar 5 as it swivels back nor with the upward moving locking arm 18 of locking member 13, so that the danger of fingers being crushed is absent.

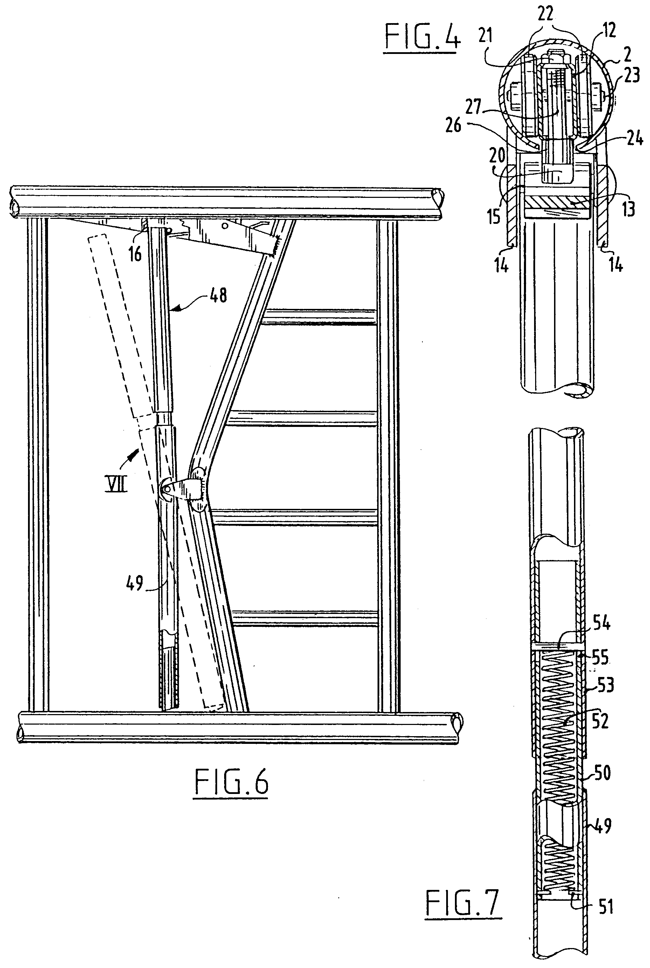

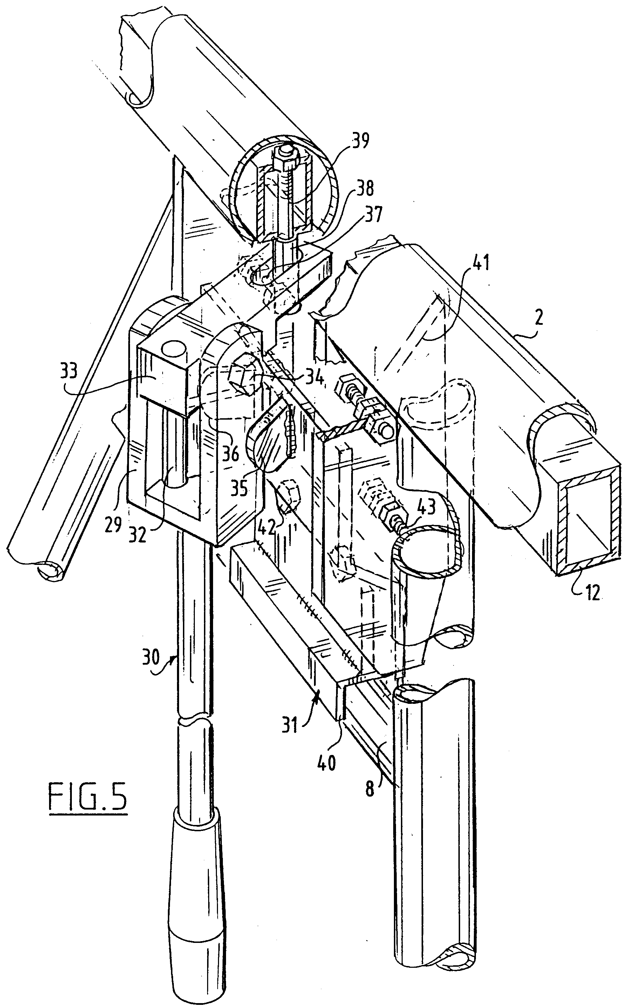

As shown in more detail in figure 4, the control cam 20 is formed by the head of a cylinder bolt 27. This is placed through a hole in the control rod 12 embodied as a rectangular tube. Riveted into the top wall of control rod 12 is a per se known nut 21. A spacer sleeve 26 is arranged below the head of the screw bolt 27.

The control rod 12 is guided in the upper beam by means of wheels 22 which are mounted in each case on a bearing pin 23 which is pushed through the control rod 12.

The cam 20 can come into contact with the control arm 19 of the lock 13 via a slot 24 formed for this purpose in the bottom surface of upper beam 2. The bearing pin 23 is pushed for free sliding through the bore in the control rod 12 and the wheels 22 are likewise arranged freely slidable on the bearing pin 23. The bearing pin 23 and wheels 22 are held in place because they are enclosed in the upper beam 2. As further shown more clearly in figure 4, in the chosen embodiment wherein the upper beam 2 is a round tube, the load of the wheels 22 is such that these are constrained toward each other. The control rod 12 is hereby positioned accurately in the tube.

After the control rod 12 with the wheels 23 arranged thereon has been placed in the tube 2, the screw bolts 27 are arranged in the correct positions. Because the screw bolts protrude through the slots 24 the control rod 12 is enclosed therewith inside the upper beam.

The control rod 12 can be placed in the different positions shown in figures 2 and 3 using a control lever 30 shown in more detail in figure 5. This is arranged on a sub-frame 31 which can be mounted releasably on each feeding fence section. Sub-frame 31 comprises on its upper part a V-shaped recess 41 with which it is fixed in transverse direction relative to the upper beam 2 and a support 40 which fits astride the rod 8. The support 40 is mounted using bolts 42. A pivot pin 32 is fixed to the sub-frame 31 protruding therefrom. An arm 33 is pivotally mounted on this pivot pin 32. The control lever 30 is connected to this arm 33. When the control lever 30 is pivoted upward from the position shown in figure 5 into a horizontal position the arm 33 can be moved reciprocally with this lever.

The protruding end of arm 33 is provided with a slot 37 into which engages a cam 38 formed in a manner similar to the control cam 20 for the locks by a bolt 39 screwed into the control rod 12 and protruding through a slot in the bottom surface of the upper beam 2.

In the downward pivoted position of the lever 30 as shown in figure 5 the side face of the fork 29 lies against a stop 35 which prevents the arm 33 swivelling to the right as seen in figure 5. After the arm 33 has been moved into the position swivelled to the right it can likewise be locked again in the position swivelled to the right using the raised lever 30 by laying the fork 29 against the stop 36 shown in dashed lines.

The sub-frame 31 is positioned in lengthwise direction of the fence using adjustment bolts 43. The two positions of the control cams 20 relative to the locks 13 are hereby accurately determined.

The alternative swivel bar 48 shown in figure 6 comprises a base part 49 that is slightly longer than half the total bar. An inner tube 50 is fixedly welded into the upper portion. Fitted into this inner tube 50 is a spring 52 which lies at its bottom end against a stop 51 forming an entity with inner tube 50. At its top end the spring 52 lies against a pin 54 which extends through a vertical slot-like opening 55. The pin 54 engages into a tube 53 slidable over the inner tube 50. This outer tube 53 which forms the upper portion of swivel bar 48 is thus constrained by the spring 52 into the moved upward position shown in figures 6 and 7. By forcing the outer tube 53 downward counter to the force of the spring 52 the top end of the swivel bar can move further beneath the stop 16 which normally defines the catching position for the swivel bar. The swivel bar 48 can hereby be moved as shown in figure 6 into a further swivelled position as drawn with dashed lines. The opening at the bottom of the feed location is hereby enlarged whereby a prone animal can withdraw its head and thereby stand up more easily.

As is further shown in the figures, a bore is arranged in the guide plates 14 just behind the swivel bar 5 when this is in the catching position, through which bore an individual locking pin 17 can be pushed. When this locking pin 17 is arranged the swivel bar 5 remains locked in the catching position irrespective of the action of control rod 12.

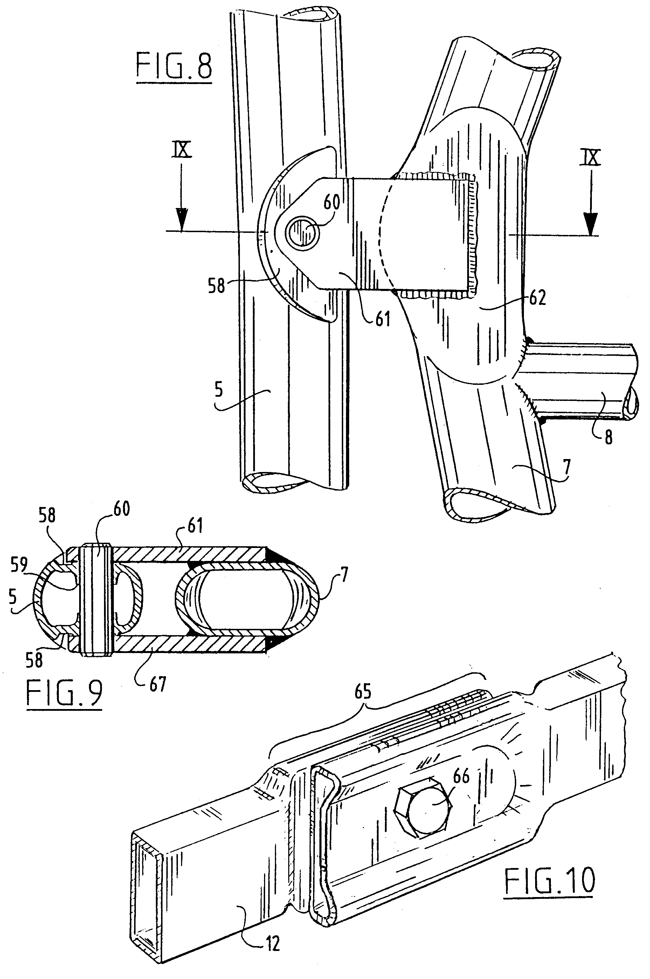

The swivel bars 5, 48 are somewhat flattened close to their pivot point, as indicated with the reference numeral 58 in figures 8 and 9. The flattening 58 has been made over a distance roughly equal to the thickness of two hinge plates 61 so that the total thickness of the hinge construction at the location of the pivot pin 60 substantially corresponds with the nominal diameter of the swivel bar 5. Using a per se known flow drill process a bore 59 is arranged in the flattened portion 58, in which bore a pivot pin 60 engages with a press fit. This pivot pin 60 just protrudes into the openings in the hinge plates 61 so that the hinge construction has no protruding parts and there is therefore no danger that animals remain snagged behind this, for instance with their collar.

The folding bar 7 is also pressed flat at the position of the hinge construction, as designated with the numeral 62, so that the hinge plates 61 come to lie at the correct mutual distance.

The feeding fence can be constructed in typical manner from a number of sections each defining a number of feed locations 10. The control rods of each of these sections are mutually connected. As shown in figure 10, this is realized in the embodiment shown by flattening the ends of the control rod 12, in each case through half the thickness. The thus flattened portions are mutually connected overlapping one another using bolts 66. This results in a robust and reliable longitudinal join with an accurate relative position of the joined control rod parts.

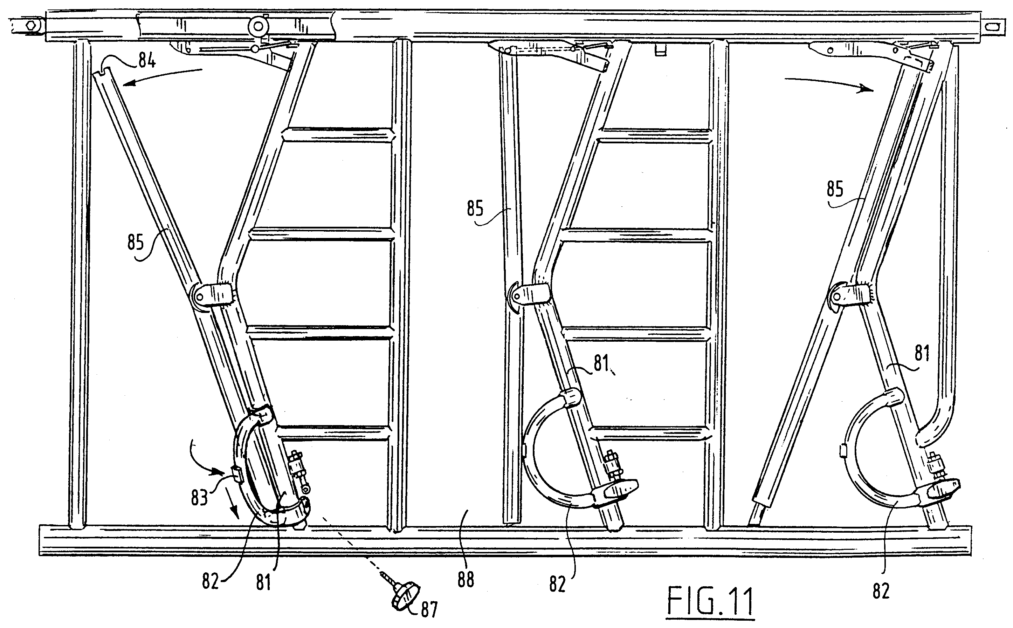

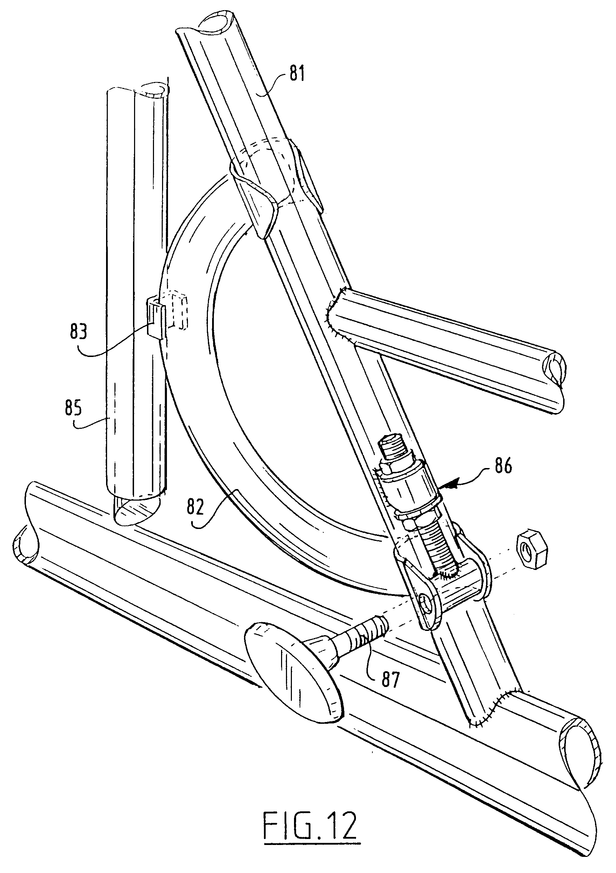

The construction as in figure 11 differs from that in figure 1 in that the bar portion 81 is provided with a swivel bracket 82. This latter has a stop surface 83 which co-acts with the swivel bar 85. At the top end the swivel bar 85 is provided with a catching groove 84. The bracket 82 is adjustable in lengthwise direction of the bar 81. This adjustability is obtained with the adjusting screw construction 86 as shown in figure 12. The bracket is fixed in the desired position using the clamp bolt construction 87.

The bracket 82 has the following function. When the animal lies down while the cubicle is in the catching position 88 it is only possible to allow the animal to leave the cubicle when the swivel bar 85 is swivelled counter clockwise such that the feed location opening is enlarged at the bottom. As alternative for the construction according to figure 6 the bracket 82 can in such a case be swivelled to a position outside the plane of the feeding fence (left in figure 11). The swivel bar 85 can therefore be swivelled further in the direction of the arrow, that is, counter clockwise, so that the passage opening at the bottom is considerably enlarged and the animal can be released from the catching position.

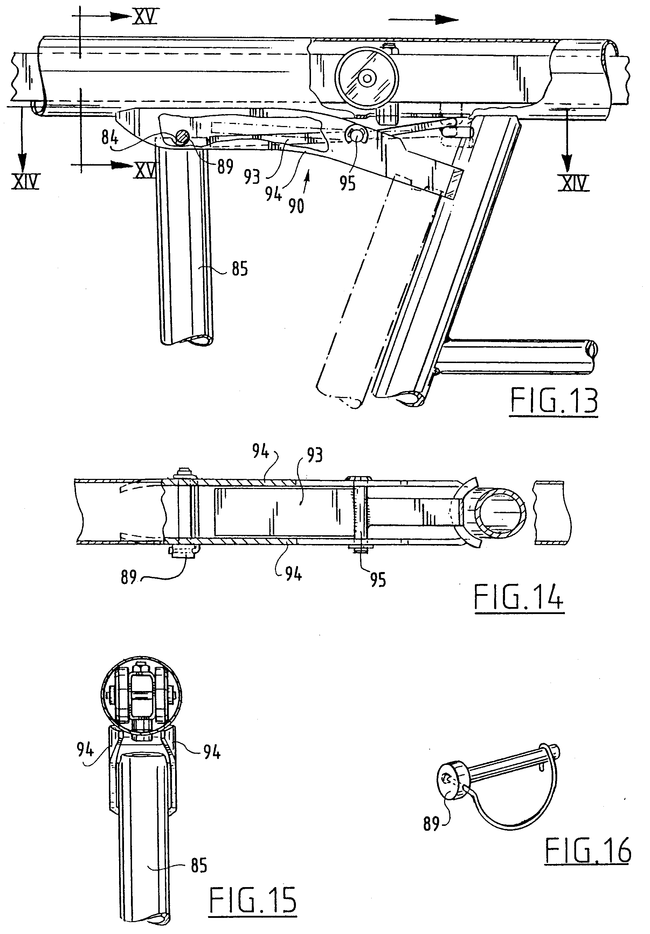

Figure 13 shows an alternative possibility for individual placing of a swivel bar in the catching position. The catching groove 84 can, in co-action with a locking pin 89 (figure 16), block the swivel bar manually as required in the catching position. Such a situation applies for instance when the animal must be fixed in the feeding fence for instance for examination by a veterinary.

Further shown in figures 13 to 15 is an alternative embodiment of the locking mechanism. The locking mechanism 90 consists of a pivot pin 95 around which the locking member 93 can swivel between the positions shown in figure 13 with full and broken lines. The locking member 93 is bounded on either side by two guide plates 94. The length of the locking member is chosen such that in the catching position 88 (figure 11) the locking member lies almost wholly to the right of swivel bar 85 as seen in the drawings. This prevents the animal injuring itself when it makes an upward movement in the catching position and eventually makes contact with the relatively sharp portions of the locking member. This is achieved according to the invention in that the locking member 93 has a virtually straight shape. The total construction height of the locking mechanism can thereby be reduced.

In order to ensure that the locking member 93 falls to the blocking position in operationally reliable manner under the influence of the force of gravity, the portion of the locking member 93 located to the left of pivot pin 95 is provided due to a greater width with a greater weight than the portion located on the other side of the pivot pin. By moving the locking member downward with the finger a feed location can be individually set into the release position.

## Claims

1. Self-catching feeding fence for cattle comprising a hollow upper beam (2) and a lower beam (3) parallel thereto between which a number of feed locations (10) are defined in each case by a first fixed bar (4) connected to the beams and a swivel bar (5, 85) which is connected between its ends for swivelling in the plane of the fence to a second fixed bar (7, 81) and swivellable between an open position in which the swivel bar (5) is swivelled with its upper end away from the first fixed bar (4) in order to form a passage opening at the top for the head of an animal, and an upright swivelled catching position, wherein mounted above each swivel bar (5) but below the upper beam (2) is a pivoting locking member which, in a locking position, can allow passage of the top end of the swivel bar (5) during the movement from the open position to the catching position and subsequently locks this in the catching position, and wherein a control rod (12) received in the upper beam (2) is arranged to co-act with the locking member (13), which rod is provided with a control cam (20), **characterized in that** said control rod (12) is mounted slidably in its lengthwise direction in the upper beam (2) and in that said control cam (20) protrudes downward through a slot (24) in the upper beam and releases the locking member in a first slide position of the control rod and swivels the locking member (13) out of engagement with the swivel bar (5) in a second slide position.

2. Feeding fence as claimed in claim 1, wherein the locking member (13) is mounted between two guide plates (14) which are arranged at a mutual distance under the upper beam (2) and which enclose the upper end of the swivel bar (5) at the sides.

3. Feeding fence as claimed in claim 2, wherein the locking member (13) comprises a control (19) arm co-acting with the control cam (20) and a locking arm (18) extending therefrom in opposite direction and engaging on the swivel bar (5) and wherein the control cam (20) presses the control arm downward in the second slide position of the control rod (12).

4. Feeding fence as claimed in claim 3, wherein at least one of the guide plates (14) under the upper beam (2) leaves free an opening (11) close to the position of the control arm (19) of the locking member (13), which opening provides access to only the upper part of the control arm (19).

5. Feeding fence as claimed in any of the foregoing claims, wherein bearing pins (23) are pushed through the control rod (12) at regular intervals, onto which pins (23) guide wheels (22) engaging on the inner surface of the hollow upper beam (2) are mounted on both sides of the rod (12).

6. Feeding fence as claimed in claim 5, wherein each bearing pin (23) is placed freely slidable through the control rod (12) and each wheel (22) is pushed freely slidable on a bearing pin and the bearing pins and wheels are held in place by being enclosed in the upper beam (2).

7. Feeding fence as claimed in any of the foregoing claims, wherein each control cam (20) is formed by a head of a screw bolt protruding through the associated slot (24) in the upper beam (2), which bolt is screwed into a nut (21) attached to the control rod (12).

8. Feeding fence as claimed in any of the foregoing claims, wherein a bore is arranged in the guide plates (14) for receiving a blocking pin (17) engaging behind the swivel bar (5).

9. Feeding fence as claimed in any of the foregoing claims, wherein counter to spring force the upper portion of the swivel bar (5) can be retracted telescopically relative to the other portion in order to be able to pass a stop (16) defining the catching position and to be able to swivel in the direction of the open position to the catching position further beyond the catching position.

10. Feeding fence as claimed in any of the foregoing claims, wherein the swivel bar (5) is somewhat flattened at the position of the hinge, a pivot hole is arranged in the flattened portion by a flow drill proces and a pivot pin (60) engages with a press fit into the flow drill hole, wherein the pivot pin just extends on either side through hinge plates (61, 67) of the fence.

11. Feeding fence as claimed in any of the foregoing claims, wherein the control rod (12) co-acts with a control lever (30) which engages onto a cam of the control rod (58) protruding through a slot in the upper beam (2) and which is mounted on a sub-frame (31) mounted releasably on the fence.

12. Feeding fence as claimed in claim 11, wherein the sub-frame (31) is provided with adjustable stops (43) with which the position of the sub-frame in longitudinal direction of the fence can be precisely adjusted.

13. Feeding fence as claimed in claim 12, wherein the adjustable stops (43) are formed by screw bolts.

14. Feeding fence as claimed in any of the claims 11-13 assembled from a number of sections each defining a number of feed locations, wherein each section is provided with a control cam (38) for engagement thereon of a control lever (30).

15. Feeding fence as claimed in claim 14, wherein the control rod (12) of each section is flattened at its ends (65) to substantially half its thickness and the thus flattened ends of the control rods of adjacent sections are connected mutually overlapping.

16. Feeding fence as claimed in claim 1, **characterized in that** below the swivel point with the swivel bar (85) the second fixed bar (81) has a stop bracket (82) which can swivel between a position in the plane of the feeding fence and a position varying therefrom.

17. Feeding fence as claimed in claim 16, **characterized in that** the stop bracket (82) is adjustable in longitudinal direction of the fixed bar (81).

18. Feeding fence as claimed in claims 16, 17, **characterized in that** the swivel bar (85) has on the top end a catching groove (84) co-acting with a locking pin (89).

19. Feeding fence as claimed in claims 1, 16-18, **characterized in that** the locking member (93) has a weight distribution in relation to the pivot point (95) such that it is subjected to a bias force in the direction of the locking position.

20. Feeding fence as claimed in claims 16-19, **characterized in that** the length of the locking member (93) is chosen such that in the catching position of the swivel bar (85) it lies within the space defined by the swivel bar and the fixed bar.

## Patentansprüche

1. Selbstfang-Futtergitter für das Vieh mit einem oberen hohlen Träger (2) und einem unteren Träger (3), der parallel hierzu verläuft, und mit mehreren Futterstellen (10), die jeweils durch eine erste feste, mit den Trägern verbundene Stange (4) und eine Schwenkstange (5, 85) definiert sind, die im Mittelabschnitt schwenkbar in der Ebene des Gitters an einer zweiten festen Stange (7, 81) angelenkt ist und zwischen einer Öffnungsstellung und einer aufrechten Fangstellung verschwenkbar ist, wobei in der Öffnungsstellung die Schwenkstange (5) mit ihrem oberen Ende von der ersten festen Stange (4) weg bewegt ist, um im Oberteil eine Durchtrittsöffnung für den Kopf eines Tieres zu schaffen, wobei über jeder Schwenkstange (5), aber unter dem oberen Träger (2) ein schwenkbares Verriegelungsglied angeordnet ist, das in Verriegelungsstellung den Durchtritt des oberen Endes der Schwenkstange (5) während ihrer Bewegung von der Öffnungsstellung nach der Fangstellung ermöglicht und danach die Schwenkstange in der Fangstellung verriegelt, und wobei eine Steuerstange (12) im oberen Träger (2) angeordnet ist, um mit dem Verriegelungsglied (13) zusammenzuwirken, wobei die Stange mit einem Steuernocken (20) versehen ist,
dadurch gekennzeichnet, daß die Steuerstange (12) gleitbar in Längsrichtung im oberen Träger (2) gelagert ist und daß der Steuernocken (20) nach unten durch einen Schlitz (24) im oberen Träger hindurchsteht und das Verriegelungsglied in einer ersten Verschiebestellung der Steuerstange freigibt, und in einer zweiten Verschiebestellung das Verriegelungsglied (13) außer Eingriff mit der Schwenkstange (5) bringt.

2. Futtergitter nach Anspruch 1, bei welchem das Verriegelungsglied (13) zwischen zwei Führungsplatten (14) montiert ist, die in einem gegenseitigen Abstand unter dem oberen Träger (2) angeordnet sind und die ein oberes Ende der Schwenkstange (5) seitlich umschließen.

3. Futtergitter nach Anspruch 2, bei welchem das Verriegelungsglied (13) einen Steuerarm (19) aufweist, der mit dem Steuernocken (20) und einem Verriegelungsarm (18) zusammenwirkt, der in Gegenrichtung verläuft und an der Schwenkstange (5) angreift, wobei der Steuernocken (20) den Steuerarm in der zweiten Verschiebestellung der Steuerstange (12) nach unten drückt.

4. Futtergitter nach Anspruch 3, bei welchem wenigstens eine der Führungsplatten (14) unter dem oberen Träger (2) nahe der Stelle des Steuerarms (19) des Verriegelungsgliedes (13) eine Öffnung (11) freiläßt, die nur den oberen Teil des Steuerarms (19) zugänglich macht.

5. Futtergitter nach einem der vorhergehenden Ansprüche, bei welchem Lagerzapfen (23) in regelmäßigen Abständen in die Steuerstange (12) eingeführt sind, auf denen Rollen (22) laufen, die auf der inneren Oberfläche des hohlen oberen Trägers (2) ablaufen und auf beiden Seiten der Stange (12) geführt sind.

6. Futtergitter nach Anspruch 5, bei welchem jeder Lagerzapfen (23) frei gleitbar in der Steuerstange (12) ist und jede Rolle (22) frei gleitbar auf ihrem Lagerzapfen sitzt und die Lagerzapfen und die Rollen durch den sie einschließenden oberen Träger (2) an Ort und Stelle gehalten werden.

7. Futtergitter nach einem der vorhergehenden Ansprüche, bei welchem jeder Steuernocken (20) durch einen Kopf eines Schraubbolzens gebildet ist, der durch den zugeordneten Schlitz (24) im oberen Träger (2) vorsteht, wobei der Bolzen in eine Mutter (21) eingeschraubt ist, die an der Steuerstange (12) festgelegt ist.

8. Futtergitter nach einem der vorhergehenden Ansprüche, bei welchem eine Bohrung in den Führungsplatten (14) angeordnet ist, um einen Sperrstift (17) aufzunehmen, der hinter der Schwenkstange (5) angreift.

9. Futtergitter nach einem der vorhergehenden Ansprüche, bei welchem der obere Abschnitt der Schwenkstange (5) teleskopartig relativ zu dem anderen Abschnitt gegen Federkraft zurückgezogen werden kann, um an einem Anschlag (16) vorbeizulaufen, der die Fangstellung definiert, und um eine Verschwenkung von der Öffnungsstellung in die Fangstellung und weiter über die Fangstellung hinaus zu bewirken.

10. Futtergitter nach einem der vorhergehenden Ansprüche, bei welchem die Schwenkstange (5) in ihrem Gelenkbereich etwas abgeflacht ist, wobei ein Schwenkloch in dem abgeflachten Abschnitt durch ein Strömungsmittelbohrverfahren eingebracht ist und wobei ein Schwenkstift (60) mit Preßsitz in das Strömungsbohrloch eingreift, wobei der Schwenkstift sich auf beiden Seiten gerade durch die Gelenkplatten (61, 67) des Gitters erstreckt.

11. Futtergitter nach einem der vorhergehenden Ansprüche, bei welchem die Steuerstange (12) mit einem Steuerhebel (30) zusammenwirkt, der auf einen Nocken der Steuerstange (58) einwirkt, der durch einen Schlitz im oberen Träger (2) vorsteht und auf einem Unterrahmen (31) montiert ist, der lösbar am Gitter festgelegt ist.

12. Futtergitter nach Anspruch 11, bei welchem der Unterrahmen (31) mit einstellbaren Anschlägen (43) versehen ist, mit denen die Lage des Unterrahmens in Längsrichtung des Gitters präzise eingestellt werden kann.

13. Futtergitter nach Anspruch 12, bei welchem die einstellbaren Anschläge (43) von Schraubbolzen gebildet werden.

14. Futtergitter nach einem der Ansprüche 11 bis 13, welches aus mehreren Abschnitten zusammengesetzt ist, die jeweils mehrere Futterstellen definieren, wobei jeder Abschnitt mit einem Steuernocken (38) versehen ist, der mit einem Steuerhebel (30) in Eingriff steht.

15. Futtergitter nach Anspruch 14, bei welchem die Steuerstange (12) eines jeden Abschnitts an ihren Enden (65) auf etwa die Hälfte der Dicke abgeflacht ist und wobei die so abgeflachten Enden der Steuerstangen benachbarter Abschnitte gegenseitig überlappend verbunden sind.

16. Futtergitter nach Anspruch 1,
dadurch gekennzeichnet, daß unter dem Schwenkpunkt der Schwenkstange (85) die zweite feste Stange (81) einen Anschlagausleger (82) aufweist, der aus seiner Stellung in der Ebene des Futtergitters in eine Stellung verschwenkbar ist, in der er aus der Ebene des Gitters herausverschwenkt ist.

17. Futtergitter nach Anspruch 16,
dadurch gekennzeichnet, daß der Anschlagausleger (82) in Längsrichtung der festen Stange (81) einstellbar ist.

18. Futtergitter nach den Ansprüchen 16, 17, dadurch gekennzeichnet, daß die Schwenkstange (85) am oberen Ende eine Fangnut (84) aufweist, die mit einem Sperrstift (89) zusammenwirkt.

19. Futtergitter nach den Ansprüchen 1 und 16 bis 18, dadurch gekennzeichnet, daß das Verriegelungsglied (93) eine Gewichtsverteilung bezüglich des Schwenkpunktes (95) in der Weise besitzt, daß es in Richtung auf die Verriegelungsstellung vorgespannt wird.

20. Futtergitter nach den Ansprüchen 16 bis 19, dadurch gekennzeichnet, daß die Länge des Verriegelungsgliedes (93) so gewählt ist, daß in der Fangstellung der Schwenkstange (85) diese innerhalb des Raumes liegt, der durch die Schwenkstange und die feste Stange definiert ist.

## Revendications

1. Barrière d'alimentation à saisie automatique pour du bétail, comprenant une poutre supérieure creuse (2) et une poutre inférieure (3) parallèle à celle-ci, entre lesquelles de nombreux emplacements d'alimentation (10) sont définis dans chaque cas par une première barre fixe (4) reliée aux poutres et une barre pivotante (5, 85) qui est reliée entre ses extrémités pour pivoter dans le plan de la barrière par rapport à une deuxième barre fixe (7, 81), et qui peut pivoter entre une position ouverte dans laquelle la barre pivotante (5) est tournée avec son extrémité supérieure écartée de la première barre fixe (4) afin de former une ouverture de passage en haut pour la tête d'un animal, et une position de saisie tournée en position droite, dans laquelle, au-dessus de chaque barre pivotante (5) mais au-dessous de la poutre supérieure (2), est monté un organe de blocage de pivotement qui, dans une position de verrouillage, peut permettre le passage de l'extrémité supérieure de la barre pivotante (5) pendant le mouvement de la position ouverte à la position de saisie, et verrouille ensuite celle-ci dans la position de saisie, et dans laquelle une tige de commande (12) logée dans la poutre supérieure (2) est disposée pour coopérer avec l'organe de verrouillage (13), laquelle tige est munie d'une came de commande (20), caractérisée en ce que ladite tige de commande (12) est montée de manière coulissante dans sa direction longitudinale dans la poutre supérieure (2), et en ce que ladite came de commande (20) dépasse vers le bas à travers une fente (24) ménagée dans la poutre supérieure et libère l'organe de verrouillage dans une première position de coulissement de la tige de commande et fait pivoter l'organe de verrouillage (13) pour le dégager de sa prise avec la barre pivotante (5) dans une deuxième position de coulissement.

2. Barrière d'alimentation selon la revendication 1, dans laquelle l'organe de verrouillage (13) est monté entre deux plaques de guidage (14) qui sont disposées à une distance mutuelle sous la poutre supérieure (2) et qui enserrent l'extrémité supérieure de la barre pivotante (5) sur les côtés.

3. Barrière d'alimentation selon la revendication 2, dans laquelle l'organe de verrouillage (13) comprend un bras de commande (19) coopérant avec la came de commande (20) et un bras de verrouillage (18) s'étendant depuis celui-ci dans la direction opposée et se mettant en prise sur la barre pivotante (5), et dans laquelle la came de commande (20) presse le bras de commande vers le bas dans la deuxième position de coulissement de la tige de commande (12).

4. Barrière d'alimentation selon la revendication 3, dans laquelle au moins l'une des plaques de guidage (14) sous la poutre supérieure (2) laisse libre une ouverture (11) proche de la position du bras de commande (19) de l'organe de verrouillage (13), laquelle ouverture ne permet l'accès qu'à la partie supérieure du bras de commande (19).

5. Barrière d'alimentation selon l'une quelconque des revendications précédentes, dans laquelle des broches porteuses (23) sont enfoncées à travers la tige de commande (12) à des intervalles réguliers, broches (23) sur lesquelles des roues de guidage (22) en prise sur la surface intérieure de la poutre supérieure creuse (2) sont montées des deux côtés de la tige (12).

6. Barrière d'alimentation selon la revendication 5, dans laquelle chaque broche porteuse (23) est placée en coulissement libre à travers la tige de commande (12) et chaque roue (22) est enfoncée en coulissement libre sur une broche porteuse, et les broches porteuses et les roues sont tenues en place en étant enfermées dans la poutre supérieure (2).

7. Barrière d'alimentation selon l'une quelconque des revendications précédentes, dans laquelle chaque came de commande (20) est formée par la tête d'un boulon dépassant à travers la fente associée (24) dans la poutre supérieure (2), boulon qui est vissé dans un écrou (21) fixé sur la tige de commande (12).

8. Barrière d'alimentation selon l'une quelconque des revendications précédentes, dans laquelle un trou est placé dans les plaques de guidage (14) pour recevoir une broche de blocage (17) se mettant en prise derrière la barre pivotante (5).

9. Barrière d'alimentation selon l'une quelconque des revendications précédentes, dans laquelle, contre la force d'un ressort, la partie supérieure de la barre pivotante (5) peut être rétractée de manière télescopique par rapport à l'autre partie afin de pouvoir passer un arrêt (16) définissant la position de saisie et à pouvoir pivoter au-delà de la position de saisie dans la direction de la position ouverte à la position de saisie.

10. Barrière d'alimentation selon l'une quelconque des revendications précédentes, dans laquelle la barre pivotante (5) est quelque peu aplatie à l'emplacement de l'articulation, un trou de pivotement est placé dans la partie aplatie par un procédé de fluoperçage, et un ergot de pivotement (60) s'engage en ajustement serré dans le trou de fluoperçage, dans laquelle l'ergot de pivotement s'étend de chaque côté juste au travers des plaques d'articulation (61, 67) de la barrière.

11. Barrière d'alimentation selon l'une quelconque des revendications précédentes, dans laquelle la tige de commande (12) coopère avec un levier de commande (30) qui se met en prise sur une came de la tige de commande (58) dépassant à travers une fente dans la poutre supérieure (2) et qui est montée sur un sous-châssis (31) monté de manière amovible sur la barrière.

12. Barrière d'alimentation selon la revendication 11, dans laquelle le sous-châssis (31) est munie d'arrêts réglables (43) avec lesquels la position du sous-châssis peut être réglé avec précision dans la direction longitudinale de la barrière.

13. Barrière d'alimentation selon la revendication 12, dans laquelle les arrêts réglables (43) sont formés par des boulons.

14. Barrière d'alimentation selon l'une quelconque des revendications 11 à 13, assemblée à partir de nombreuses sections, définissant chacune de nombreux emplacements d'alimentation, dans laquelle chaque section est munie d'une came de commande (38) pour que s'y mette en prise un levier de commande (30).

15. Barrière d'alimentation selon la revendication 14, dans laquelle la tige de commande (12) de chaque section est aplatie à ses extrémités (65) pour réduire substantiellement de moitié son épaisseur, et les extrémités ainsi aplaties des tiges de commande de sections adjacentes sont reliées entre elles par chevauchement.

16. Barrière d'alimentation selon la revendication 1, caractérisée en ce que, sous le point de pivotement avec la barre pivotante (85), la deuxième barre fixe (81) a une patte d'arrêt (82) qui peut pivoter entre une position dans le plan de la barrière d'alimentation et une position qui en diffère.

17. Barrière d'alimentation selon la revendication 16, caractérisée en ce que la patte d'arrêt (82) est réglable dans la direction longitudinale de la barre fixe (81).

18. Barrière d'alimentation selon les revendications 16, 17, caractérisée en ce que la barre pivotante (85) a sur son extrémité supérieure une gorge de saisie (84) coopérant avec une broche de verrouillage (89).

19. Barrière d'alimentation selon les revendications 1, 16-18, caractérisée en ce que l'organe de verrouillage (93) a une distribution de poids par rapport au point de pivotement (95) telle qu'il est soumis à une force de réglage orientée en direction de la position de verrouillage.

20. Barrière d'alimentation selon les revendications 16-19, caractérisée en ce que la longueur de l'organe de verrouillage (93) est choisie telle que, dans la position de saisie de la barre pivotante (85), il se trouve dans l'espace défini par la barre pivotante et la barre fixe.
